# EUROPEAN PATENT APPLICATION

(11) **EP 4 807 406 A1**
(43) Date of publication of application: **16.09.2026**
(21) Application number: 24949892.4
(22) Date of filing: 20.12.2024

(54) **METHOD AND APPARATUS FOR CONSTRUCTING TEMPERATURE COMPENSATION MODEL**

(30) Priority: 12.10.2024 CN 202411421802
(71) Applicant: Shenzhen Fine Offset Electronics Co., Ltd., Shenzhen, Guangdong 518104 (CN)
(72) Inventor: XU, Yuhong, Shenzhen, Guangdong 518104 (CN)
(74) Representative: IP TRUST SERVICES
(86) International application number: PCT/CN2024/140876
(87) International publication number: WO 2026/076826

(57) **Abstract**

A method and apparatus for constructing a temperature compensation model are provided in the present disclosure, which are applied to a mini weather station including a large-mass main body, an environmental sensor and two temperature sensors. The method includes: acquiring two pieces of current temperature data from the two temperature sensors, respectively, acquiring two pieces of offset temperature data from the two temperature sensors, respectively, and acquiring environmental data, which is within an offset time period, from the environmental sensor; determining, based on the two pieces of current temperature data, the two pieces of offset temperature data, and the environmental data, multiple pieces of current combined data and multiple pieces of offset combined data; constructing a training dataset based on the two pieces of current temperature data, the multiple pieces of current combined data, the multiple pieces of offset combined data, and target temperature data; and training a linear regression model based on the training dataset to obtain the temperature compensation model. The temperature compensation model constructed through the method in the present disclosure, together with the two temperature sensors and the environmental sensor in the mini weather station, perform real-time compensation on the measured temperature, thereby improving the accuracy of temperature measurement performed by the mini weather station.

## Description

This application claims the priority to Chinese Patent Application No. 202411421802.X, titled "METHOD AND APPARATUS FOR CONSTRUCTING TEMPERATURE COMPENSATION MODEL", filed on October 12, 2024 with the China National Intellectual Property Administration.

### FIELD

The present disclosure relates to the technical field of temperature measurement, and in particular to a method and apparatus for constructing a temperature compensation model.

### BACKGROUND

A mini weather station, designed for detecting and recording environmental parameters, is widely applied in technical fields such as meteorology and agriculture due to its convenience, ease of installation, and low cost.

Due to the structural characteristics of the mini weather station, in high-temperature and direct-sunlight environments, heat may accumulate inside the mini weather station, resulting in a higher temperature measured by a temperature sensor in the mini weather station. In snowy winter conditions, if the mini weather station is covered by ice or snow, the coverage may hinder proper contact between the temperature sensor and surrounding air, causing the temperature sensor to measure the temperature of the ice or snow covering the mini weather station rather than the temperature of the surrounding air, which results in a lower temperature measured by the temperature sensor in the mini weather station. Furthermore, when the temperature changes rapidly (either increasing or decreasing), a temperature of a large-mass body fails to rapidly respond to the temperature changes, resulting in a higher or lower temperature measured by the temperature sensor.

Accordingly, the temperature measurements by mini weather stations are inaccurate under extreme conditions, which affects the overall accuracy of temperature measurement performed by the mini weather station.

### SUMMARY

Based on the above issues, a method and apparatus for constructing a temperature compensation model are provided in the present disclosure. By using the temperature compensation model constructed according to the method provided in present disclosure, with two temperature sensors and an environmental sensor within a mini weather station, a measured temperature is compensated in real time, thereby addressing the issue of the temperature measurements by mini weather stations are inaccurate under extreme conditions and improving the overall accuracy of temperature measurement performed by the mini weather station.

The following technical solutions are provided according to embodiments of the present disclosure.

In a first aspect, a method for constructing a temperature compensation model is provided according to the present disclosure. The method is applied to a weather station. The weather station includes: a main body, an environmental sensor, and two temperature sensors. The two temperature sensors are arranged at different positions of a same medium, one of the two temperature sensors is closer to the main body than another of the two temperature sensors is.

The method includes:
acquiring two pieces of current temperature data and two pieces of offset temperature data from the two temperature sensors, and acquiring environmental data, which is within an offset time period, from the environmental sensor, where the two pieces of current temperature data are collected at a current time instant by the two temperature sensors, respectively, the two pieces of offset temperature data are collected at an offset time instant by the two temperature sensors, respectively, the offset time instant refers to a time instant preceding the current time instant by a predetermined time interval, and the offset time period refers to a time period between the current time instant and the offset time instant;
determining, based on the two pieces of current temperature data and the environmental data, multiple pieces of current combined data corresponding to the two pieces of current temperature data, and determining, based on the two pieces of offset temperature data and the environmental data, multiple pieces of offset combined data corresponding to the two pieces of offset temperature data;
constructing a training dataset based on the two pieces of current temperature data, the multiple pieces of current combined data, the multiple pieces of offset combined data, and target temperature data, where the training dataset includes multiple data subsets, and each of the data subsets includes the two pieces of current temperature data, the multiple pieces of current combined data, the multiple pieces of offset combined data, and the target temperature data; and
training a linear regression model based on the training dataset to obtain the temperature compensation model.

In an embodiment, the environmental sensor includes a wind speed sensor, and the environmental data within the offset time period acquired from the environmental sensor includes: wind speed data within the offset time period acquired from the wind speed sensor, where
the determining, based on the two pieces of current temperature data and the environmental data, multiple pieces of current combined data corresponding to the two pieces of current temperature data, and determining, based on the two pieces of offset temperature data and the environmental data, multiple pieces of offset combined data corresponding to the two pieces of offset temperature data includes:
determining, based on the two pieces of current temperature data and the wind speed data, two pieces of current combined data respectively corresponding to the two pieces of current temperature data, and determining, based on the two pieces of offset temperature data and the wind speed data, two pieces of offset combined data respectively corresponding to the two pieces of offset temperature data; and
the constructing a training dataset based on the two pieces of current temperature data, the multiple pieces of current combined data, the multiple pieces of offset combined data, and target temperature data includes:
   constructing the training dataset based on the two pieces of current temperature data, the two pieces of current combined data, the two pieces of offset combined data, and the target temperature data, where the training dataset includes multiple data subsets, and each of the data subsets includes the two pieces of current temperature data, the two pieces of current combined data, the two pieces of offset combined data, and the target temperature data.

In an embodiment, the constructing the training dataset based on the two pieces of current temperature data, the two pieces of current combined data, the two pieces of offset combined data, and the target temperature data includes:
constructing a six-variable quadratic polynomial feature based on the two pieces of current temperature data, the two pieces of current combined data and the two pieces of offset combined data; and
constructing the training dataset based on the six-variable quadratic polynomial feature and the target temperature data, where the training dataset includes multiple data subsets, and each of the data subsets includes the six-variable quadratic polynomial feature and the target temperature data.

In an embodiment, the wind speed data within the offset time period includes an average wind speed within the offset time period.

In an embodiment, the average wind speed within the offset time period is acquired by:
acquiring multiple wind speeds within the offset time period by the wind speed sensor; and
calculating the average wind speed within the offset time period based on the multiple wind speeds.

In an embodiment, the determining, based on the two pieces of current temperature data and the wind speed data, two pieces of current combined data respectively corresponding to the two pieces of current temperature data includes:
determining, through a first preset equation, the two pieces of current combined data respectively corresponding to the two pieces of current temperature data based on the two pieces of current temperature data and the wind speed data,
where the first preset equation is expressed as: ${E}_{c} = \frac{{T}_{c}}{\sqrt{ν}}$
where *E_{c}* represents the current combined data corresponding to the current temperature data, *T_{c}* represents the current temperature data, and v represents the wind speed data within the offset time period; and
the determining, based on the two pieces of offset temperature data and the wind speed data, two pieces of offset combined data respectively corresponding to the two pieces of offset temperature data includes:
   determining, through a second preset equation, two pieces of offset combined data respectively corresponding to the two pieces of offset temperature data based on the two pieces of offset temperature data and the wind speed data,
   where the second preset equation is expressed as: ${E}_{p} = \frac{{T}_{p}}{\sqrt{ν}}$
   where *Eₚ* represents offset combined data corresponding to offset temperature data, *Tₚ* represents the offset temperature data, and v represents the wind speed data within the offset time period.

In an embodiment, the predetermined time interval is a duration corresponding to a predetermined number of interval units.

In an embodiment, the training a linear regression model based on the training dataset to obtain the temperature compensation model includes:
training the linear regression model based on the training dataset to obtain the temperature compensation model, where a root mean square error and a coefficient of determination corresponding to the linear regression model are recorded in the training and the training terminates when the root mean square error and the coefficient of determination meet a predetermined requirement.

In an embodiment, after the training a linear regression model based on the training dataset to obtain the temperature compensation model, the method further includes:
acquiring two pieces of current temperature data from the two temperature sensors, respectively, and acquiring environmental data, which is within an offset time period, from the environmental sensor; and
determining actual temperature data by using the temperature compensation model, based on the two pieces of current temperature data and the environmental data within the offset time period.

In a second aspect, an apparatus for constructing a temperature compensation model is provided according to the present disclosure. The apparatus is applied to a weather station, and the weather station includes: a main body, an environmental sensor, and two temperature sensors. The two temperature sensors are arranged at different positions of a same medium, one of the two temperature sensors is closer to the main body than another of the two temperature sensors is.

The apparatus includes:
an acquisition module, configured to acquire two pieces of current temperature data and two pieces of offset temperature data from the two temperature sensors, acquire environmental data, which is within an offset time period, from the environmental sensor, where the two pieces of current temperature data are collected at a current time instant by the two temperature sensors, respectively, the two pieces of offset temperature data are collected at an offset time instant by the two temperature sensors, respectively, the offset time instant refers to a time instant preceding the current time instant by a predetermined time interval, and the offset time period refers to a time period between the current time instant and the offset time instant;
a combination module, configured to determine, based on the two pieces of current temperature data and the environmental data, multiple pieces of current combined data corresponding to the two pieces of current temperature data, and determine, based on the two pieces of offset temperature data and the environmental data, multiple pieces of offset combined data corresponding to the two pieces of offset temperature data;
a construction module, configured to construct a training dataset based on the two pieces of current temperature data, the multiple pieces of current combined data, the multiple pieces of offset combined data, and target temperature data, where the training dataset includes multiple data subsets, and each of the data subsets includes the two pieces of current temperature data, the multiple pieces of current combined data, the multiple pieces of offset combined data, and the target temperature data; and
a training module, configured to train a linear regression model based on the training dataset to obtain the temperature compensation model.

In an embodiment, the acquisition module is configured to acquire two pieces of current temperature data respectively from the two temperature sensors, acquire two pieces of offset temperature data respectively from the two temperature sensors, and acquire wind speed data, which is within an offset time period, from a wind speed sensor.

The combination module is configured to is configured to determine, based on the two pieces of current temperature data and the wind speed data, two pieces of current combined data respectively corresponding to the two pieces of current temperature data, and determine, based on the two pieces of offset temperature data and the wind speed data, two pieces of offset combined data respectively corresponding to the two pieces of offset temperature data.

The construction module is configured to construct a training dataset based on the two pieces of current temperature data, the two pieces of current combined data, the two pieces of offset combined data, and target temperature data.

In an embodiment, the construction module is configured to construct a six-variable quadratic polynomial feature based on the two pieces of current temperature data, the two pieces of current combined data and the two pieces of offset combined data; construct the training dataset based on the six-variable quadratic polynomial feature and the target temperature data. The training dataset includes multiple data subsets, and each of the data subsets includes the six-variable quadratic polynomial feature and the target temperature data.

In an embodiment, the construction module is configured to construct a six-variable quadratic polynomial feature based on the two pieces of current temperature data, the two pieces of current combined data and the two pieces of offset combined data; construct the training dataset based on the six-variable quadratic polynomial feature and the target temperature data. The training dataset includes multiple data subsets, and each of the data subsets includes the six-variable quadratic polynomial feature and the target temperature data.

In an embodiment, the combination module is configured to determine, through a first preset equation, the two pieces of current combined data respectively corresponding to the two pieces of current temperature data based on the two pieces of current temperature data and the wind speed data; and determine, through a second preset equation, two pieces of offset combined data respectively corresponding to the two pieces of offset temperature data based on the two pieces of offset temperature data and the wind speed data.

In an embodiment, the training module is configured to train the linear regression model based on the training dataset to obtain the temperature compensation model, where a root mean square error and a coefficient of determination corresponding to the linear regression model are recorded in the training and the training terminates when the root mean square error and the coefficient of determination meet a predetermined requirement.

Compared with the conventional technology, following beneficial effects are implemented in the present disclosure. Temperature conduction delay and the influence of other environmental parameters are taken into consideration in the present disclosure, such that the offset temperature data and the environmental data are involved in the construction of the temperature compensation model, thereby improving the performance of the temperature compensation model. In addition, in the present disclosure, it is considered that the periodic turning on and off of the internal heat source apparatus causes the temperature curve of a single temperature sensor to exhibit characteristics of a second-order Fourier curve and thus failing to establish a one-to-one mapping relationship between the output value of the temperature sensor and the target value. Therefore, an additional temperature sensor is provided at a different position within the same medium, that is, two temperature sensors are arranged inside the mini weather station for temperature measurement. The temperature compensation model constructed through the method according to the embodiments of the present disclosure, together with the two temperature sensors and the environmental sensor in the mini weather station, perform real-time compensation on the measured temperature, thereby addressing the issue of the temperature measurements by the mini weather station are inaccurate under extreme conditions and improving the accuracy of temperature measurement performed by the mini weather station.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.
FIG. 1 is a schematic diagram showing a distribution of two temperature sensors according to an embodiment of the present disclosure;
FIG. 2 is a flowchart of a method for constructing a temperature compensation model according to an embodiment of the present disclosure;
FIG. 3 is a flowchart illustrating a temperature measurement implemented by using the temperature compensation model according to an embodiment of the present disclosure;
FIG. 4 is a flowchart of a method for constructing a temperature compensation model according to another embodiment of the present disclosure; and
FIG. 5 is a schematic structural diagram of an apparatus for constructing a temperature compensation model according to an embodiment of the present disclosure.

### DETAILED DESCRIPTION

As described above, in the conventional technology, the temperature measurement by a mini weather station is inaccurate under extreme weather conditions due to structural characteristics of the mini weather station. In high-temperature and direct-sunlight environments, heat may accumulate inside the mini weather station, resulting in an inaccurate (higher) temperature measured by a temperature sensor. In snowy winter conditions, ice or snow covering the mini weather station not only cause the temperature sensor to measure the temperature of the ice or snow, but can also impair the performance of internal sensors of the mini weather station, particularly the temperature sensor, leading to inaccurate readings from the temperature sensor.

Furthermore, in the conventional technology, to prevent snow or ice coverage on the mini weather station from affecting the performance of internal sensors of the mini weather station, a heat source apparatus is provided inside the mini weather station to increase an internal temperature of the mini weather station, thereby melting the snow or ice covering the mini weather station. For example, a heating plate may be provided inside the mini weather station, so that when snow or ice covers the mini weather station, the heat source apparatus increases the internal temperature of the mini weather station, thereby melting the snow and ice covering the mini weather station.

However, due to the arrangement of the heat source apparatus inside the mini weather station, an additional heat source interference is introduced to the internal sensors of the mini weather station, particularly the temperature sensor. As a result, under snowy winter conditions, the temperature sensor inside the mini weather station still fails to accurately measure the actual outdoor temperature.

Hereinafter, the provision of a heating plate inside the mini weather station is taken as an example, the effect of the heat source apparatus on temperature measurement is described. It should be noted that the effect in high-temperature or direct-sunlight environment is similar to that caused by providing the heat source apparatus inside the mini weather station.

The turn-on and turn-off of the heating plate (that is, the heat source apparatus) is affected by the ambient temperature and heat dissipation. In other words, the working characteristics of the heating plate is affected by the ambient temperature and heat dissipation conditions, and the heating plate does not perform heating at a fixed temperature point. For example, in a relatively enclosed environment, the heat generated by the heating plate is less likely to dissipate, resulting in a more pronounced heating effect; while under high wind-speed conditions, heat dissipates rapidly, so that more energy is required to be provided by the heating plate to maintain the set temperature. Furthermore, the heating plate is equipped with an energy-saving mode, which means that it stops heating when a certain temperature is reached and restarts heating when the temperature decreases to a specific threshold. The energy-saving mode of the heating plate includes a critical temperature range within which the heating plate is periodically turned on and off. Under the condition of periodically turning on and off the heating plate, the temperature curve recorded by the temperature sensor in the mini weather station exhibits characteristics of a second-order Fourier curve.

In general, a temperature sensor is arranged inside a mini weather station, and a heat source apparatus is additionally arranged inside the mini weather station. The heat source apparatus is periodically turned on and off within a critical temperature range, as a result, by performing heat conduction modeling with a single temperature sensor inside the mini weather station, that is, by mapping a current output value of the single temperature sensor to an actual (target) value, a one-to-one mapping relationship between the output value and the target value cannot be established in some temperature ranges, so that the mini weather station fails to accurately measure the temperature.

A method for constructing a temperature compensation model is provided in the present disclosure. The method includes: acquiring two pieces of current temperature data from the two temperature sensors, respectively, acquiring two pieces of offset temperature data from the two temperature sensors, respectively, and acquiring environmental data, which is within an offset time period, from the environmental sensor; determining, based on the two pieces of current temperature data and the environmental data, multiple pieces of current combined data corresponding to the two pieces of current temperature data; determining, based on the two pieces of offset temperature data and the environmental data, multiple pieces of offset combined data corresponding to the two pieces of offset temperature data; constructing a training dataset based on the two pieces of current temperature data, the multiple pieces of current combined data, the multiple pieces of offset combined data, and target temperature data; and training a linear regression model based on the training dataset to obtain the temperature compensation model. Temperature conduction delay and the influence of other environmental parameters are taken into consideration in the present disclosure, such that the offset temperature data and the environmental data are involved in the construction of the temperature compensation model, thereby improving the performance of the temperature compensation model. As a result, the temperature compensation model constructed through the method according to the embodiments of the present disclosure, together with the two temperature sensors and the environmental sensor in the mini weather station, perform real-time compensation on the measured temperature, thereby addressing the issue of the temperature measurements by the mini weather station are inaccurate under extreme conditions and improving the accuracy of temperature measurement performed by the mini weather station.

In order to enable those skilled in the art to better understand the solutions of the present disclosure, the technical solutions of the embodiments of the present disclosure are described clearly and completely hereinafter with reference to the drawings of the embodiments of the present disclosure. Apparently, the embodiments are only part of the embodiments of the present disclosure, rather than all of the embodiments. Based on the embodiments of the present disclosure, all other embodiments obtained by those skilled in the art without any creative effort fall within the protection scope of the present disclosure.

### First embodiment

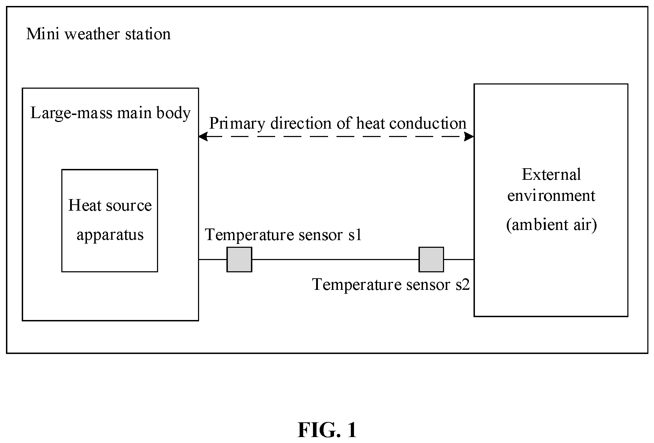

Hereinafter, a method for constructing a temperature compensation model according to the embodiment of the present disclosure is described in detail with reference to FIG. 1 to FIG. 3.

A method for constructing a temperature compensation model applied to a mini weather station is provided according to the present disclosure. The mini weather station includes: a large-mass main body, an environmental sensor, and two temperature sensors. The two temperature sensors are arranged at different positions of a same medium, one of the two temperature sensors is close to the large-mass main body, and another of the two temperature sensors is away from the large-mass main body.

The environmental sensor refers to a device used to detect and measure environmental data. In the embodiment of the present disclosure, the environmental sensor refers to a device configured to detect and measure environmental data other than the temperature sensor. For example, the environmental sensor includes a wind speed sensor, an illumination sensor, a barometric pressure sensor, or the like.

From a thermodynamic perspective, the mini weather station refers to a non-steady-state heat conduction system provided with a heat source apparatus. However, the heat source apparatus is not subjected to any control, and then the heat source apparatus inside the mini weather station is uncontrolled or unknown. When a conventional heat equation is used for mathematical modeling, the presence of uncontrollable or unknown factors makes it difficult to obtain variables, rendering such modeling infeasible. Alternatively, employing numerical methods in practical scenarios requires significant computational resources, is time-consuming, and exhibits limited accuracy, resulting in failure in addressing the technical problems in the conventional technology. Moreover, the demand for significant computational resources is inconsistent with the application range of the mini weather station.

Furthermore, according to the first-type boundary condition in the traditional heat equation, for a simple first-order heat conduction system without a heat source (that is, a weather station without a heat source), when the temperatures at two endpoints are obtained, an analytical solution to the heat equation can be derived. Accordingly, in the embodiment of the present disclosure, two temperature sensors are arranged inside the mini weather station, and temperature data collected by the two temperature sensors is acquired, thereby achieving mathematical modeling and real-time temperature compensation.

In the embodiment of the present disclosure, an additional temperature sensor is provided at a different position in the same medium. One of the two temperature sensors is close to a large-mass body, while the other temperature sensor is away from the large-mass main body (that is, both temperature sensors are arranged along the primary direction of heat conduction). In this way, two current output values and one actual (target) value can be obtained, which significantly reduces the ambiguity of mapping and increases the availability of data features, thereby improving the accuracy and general applicability of temperature measurement.

Further, the two temperature sensors are arranged at different positions in the same medium, with one temperature sensor close to the large-mass main body and the other temperature sensor away from the large-mass main body. In this way, the two temperature sensors are distributed/arranged along the primary direction of heat conduction of the mini weather station, achieving effective capture of temperature gradient information, and further increasing the usefulness of the temperature data, allowing data modeling based on the temperature data collected by the two temperature sensors, thereby accurately deriving an accurate and reliable actual temperature.

For ease of understanding, and with reference to FIG. 1, which shows a distribution of two temperature sensors along a primary direction of heat conduction, a detailed description is provided as follows.

As shown in FIG. 1, a temperature sensor s1 and a temperature sensor s2 are provided. The temperature sensor s1 and the temperature sensor s2 are both arranged along the direction of heat conduction, where the temperature sensor s1 is close to the large-mass main body, and the temperature sensor s2 is close to the external environment (which may be regarded as ambient air). The temperature sensor s1 is close to the large-mass main body, and thus is more influenced by temperature variations of the large-mass main body. The temperature sensor s2 is close to the external environment, that is, away from the large-mass main body, and is therefore less influenced by temperature variations of the large-mass main body.

The large-mass main body refers to an apparatus or structure arranged inside the mini weather station for stabilizing temperature measurement. The apparatus or structure is designed to reduce the influence of rapid fluctuations in the external ambient temperature on the temperature sensor, thereby improving accuracy and stability of the measurement. As shown in FIG. 1, in the embodiment of the present disclosure, the large-mass main body includes a heat source apparatus. The temperature sensor s1 is close to the heat source apparatus, and the temperature sensor s2 is away from the heat source apparatus.

It should be noted that, in addition to being arranged within the large-mass main body, the heat source apparatus may be arranged at other positions within the mini weather station, depending on the actual structure of the mini weather station, which is not specifically limited in the present disclosure.

As shown in FIG. 1, the heat conduction efficiency corresponding to the temperature sensor s1 is different from the heat conduction efficiency corresponding to the temperature sensor s2 along the primary direction of heat conduction (thermal temperature gradient). Such difference results from the fact that a heat conduction efficiency is approximately linearly related to a heat conduction distance and inversely proportional to the heat conduction distance. That is, under the same conditions (such as the same material and the same cross-sectional area), the heat conduction efficiency increases as the heat conduction distance decreases, and the heat conduction efficiency decreases as the heat conduction distance increases.

The heat conduction efficiency refers to the capability of heat to be transferred through a solid material from a high-temperature region to a low-temperature region (that is, along a primary direction of heat conduction). The heat conduction distance refers to a distance over which heat is transmitted during the conduction process. Under identical conditions, a shorter heat conduction distance results in a higher heat conduction efficiency, since a shorter heat conduction distance indicates a lower thermal resistance, allowing heat to be transferred more readily from the high-temperature region to the low-temperature region.

Based on the above concept, the heat conduction efficiency is approximately linearly related to the heat conduction distance along the primary direction of heat conduction. Accordingly, information of the temperature gradient (that is, the temperature gradient) are acquired from the temperature data collected by the temperature sensor s1 and the temperature sensor s2 distributed along the primary direction of heat conduction. Based on relevant physical parameters, temperature distribution between s1 and s2 can thus be derived through the heat equation, so that subsequent data modeling based on the temperature data collected by the two temperature sensors is performed to accurately perform compensation and obtain the accurate and reliable actual temperature.

In a possible implementation, the two temperature sensors are both fixed/arranged at a temperature and humidity board of the mini weather station and are spaced apart by a preset distance. One of the temperature sensors is close to the large-mass main body, where air circulation is relatively poor, while the other temperature sensor is away from the large-mass main body, where air circulation is relatively better. The temperature and humidity board of the mini weather station generally refers to a sensor module used for measuring temperature and humidity in the mini weather station, and the temperature and humidity board typically includes one or more sensor chips capable of simultaneously measuring temperature and humidity of the air.

For example, two temperature sensor chips are arranged at the temperature and humidity board, with a spacing of approximately 8 mm between them. One temperature sensor chip is close to the heating plate and the other temperature sensor chip is away from the heating plate.

In the embodiments of the present disclosure, the two temperature sensors arranged at different positions of the same medium exhibit consistency. Whether in high-temperature or direct-sunlight environment, or in a low-temperature environment during winter or when the heating plate is turned on, among the two temperature sensors inside the mini weather station, the temperature data collected by the temperature sensor close to the large-mass main body is higher than the temperature data collected by the temperature sensor away from the large-mass main body. Since the two temperature sensors are arranged within the same medium but at different positions, with one temperature sensor close to the large-mass main body and the other away from the large-mass main body (that is, both sensors are arranged along the primary direction of heat conduction), the two temperature sensors exhibit consistency, which facilitates the subsequent construction of the temperature compensation model.

Furthermore, since the two temperature sensors are arranged within the same medium, the influence of uncertain factors is reduced by means of variable control when the temperature data are acquired/measured by the two temperature sensors, thereby improving the validity of the temperature data obtained by the temperature sensors.

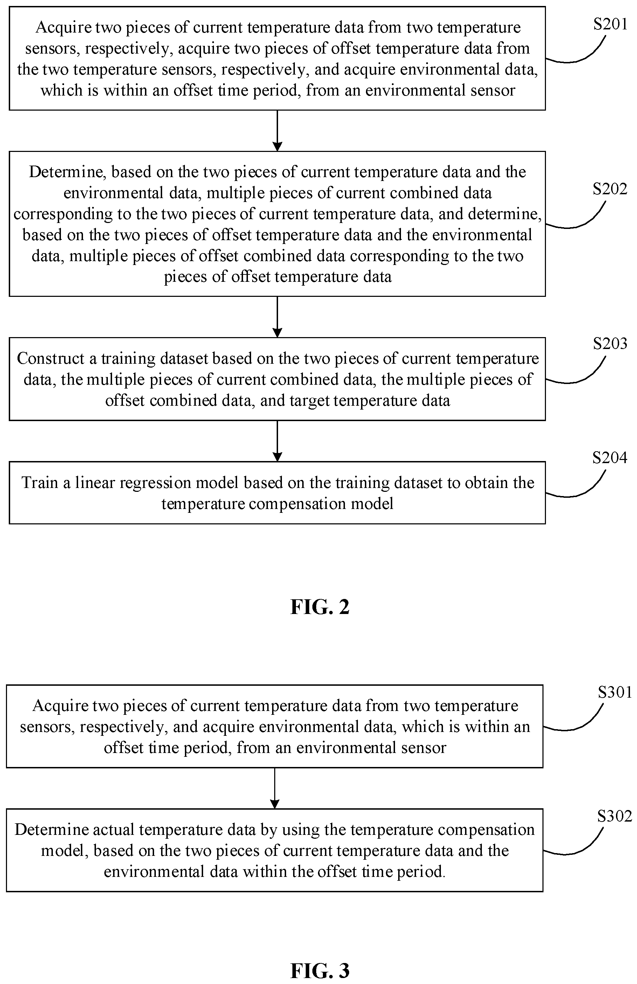

As shown in FIG. 2, a method for constructing a temperature compensation model according to an embodiment of the present disclosure includes the following steps S201 to S204.

In step S201, two pieces of current temperature data and two pieces of offset temperature data are acquired from the two temperature sensors, and environmental data, which is within an offset time period, is acquired from the environmental sensor.

The two pieces of current temperature data are collected at a current time instant by the two temperature sensors, respectively, the two pieces of offset temperature data are collected at an offset time instant by the two temperature sensors, respectively, and the offset time instant refers to a time instant preceding the current time instant by a predetermined time interval.

The offset time period refers to a time period between the current time instant and the offset time instant, that is, the offset time period refers to the predetermined time interval.

The environmental sensor includes: a wind speed sensor, an illumination sensor, a barometric pressure sensor, and a rainfall sensor, and the corresponding environmental data include wind speed data, illumination data, barometric pressure data, and rainfall data.

In a possible implementation, an interval unit is preset, and the predetermined time interval is a duration corresponding to a predetermined number of interval units.

For example, the interval unit is 8.75s and the predetermined number is 28, and then the predetermined time interval is a duration corresponding to 28 interval units, that is, 28×8.75=245s. The offset time period is 245s, and the offset time instant is the time instant preceding the current time instant by 245s.

In a possible implementation, the environmental data within the offset time period refers to the average of the environmental data within the offset time period.

For example, the offset time period corresponds to a duration corresponding to a predetermined number of interval units. For each of the interval units within the offset time period, environmental data at a time instant within the interval unit is acquired through the environmental sensor. That is, a predetermined number of pieces of environmental data are obtained. Based on the predetermined number of pieces of environmental data, the average of the environmental data within the offset time period is calculated.

In step S202, based on the two pieces of current temperature data and the environmental data, multiple pieces of current combined data corresponding to the two pieces of current temperature data are determined, and based on the two pieces of offset temperature data and the environmental data, multiple pieces of offset combined data corresponding to the two pieces of offset temperature data are determined.

In a possible implementation, when the environmental data within the offset time period acquired from the environmental sensor includes one piece of (one type of) environmental data (for example, wind speed data), two pieces of current combined data respectively corresponding to the two pieces of current temperature data are determined based on the two pieces of current temperature data and the one piece of environmental data; and two pieces of offset combined data respectively corresponding to the two pieces of offset temperature data are determined based on the two pieces of offset temperature data and the one piece of environmental data.

In another possible implementation, when the environmental data within the offset time period acquired from the environmental sensor includes two pieces of (two types of) environmental data (for example, wind speed data and illumination data), four pieces of current combined data(for example, two pieces of current combined data determined based on the two pieces of current temperature data and the wind speed data, and two pieces of current combined data determined based on the two pieces of current temperature data and the illumination data.) corresponding to the two pieces of current temperature data are determined, based on the two pieces of current temperature data and the two pieces of environmental data; and four pieces offset combined data corresponding to the two pieces of offset temperature data are determined, based on the two pieces of offset temperature data and the two pieces of environmental data.

In summary, when the environmental data within the offset time period acquired from the environmental sensor includes n pieces of (n types of) environmental data, 2n pieces of current combined data corresponding to the two pieces of current temperature data are determined based on the two pieces of current temperature data and the n pieces of environmental data; and 2n pieces of offset combined data corresponding to the two pieces of offset temperature data are determined based on the two pieces of offset temperature data and the n pieces of environmental data, where n is a positive integer.

In step S203, a training dataset is constructed based on the two pieces of current temperature data, the multiple pieces of current combined data, the multiple pieces of offset combined data, and target temperature data. The training dataset includes multiple data subsets, and each of the data subsets includes the two pieces of current temperature data, the multiple pieces of current combined data, the multiple pieces of offset combined data, and the target temperature data.

The target temperature data refers to standard temperature data at the current time instant. For example, a standard thermometer may be provided. The standard thermometer is not affected by the internal heat source apparatus (the heating plate). The temperature data acquired by the standard thermometer at the current time instant is then determined as the standard temperature data (that is, the target temperature data).

In step S204, a linear regression model is trained based on the training dataset to obtain the temperature compensation model.

The linear regression model is a widely used statistical method for establishing a mathematical relationship between a dependent variable (commonly referred to as a response variable or a target variable) and one or more independent variables.

In a possible implementation, the linear regression model is trained based on the training dataset to obtain the temperature compensation model. A root mean square error and a coefficient of determination corresponding to the linear regression model are recorded in the training. When the root mean square error and the coefficient of determination meet a predetermined requirement, the training of the linear regression model terminates.

The root mean square error (RMSE) is an important metric for evaluating the performance of a regression model, used to measure the difference between the output value of the regression model and the actual value (target value). Specifically, the RMSE is the square root of the average of the squared prediction errors. A smaller RMSE indicates that the output value of the regression model is closer to the actual value, and the performance of the regression model is better.

The coefficient of determination (R²) is an important metric for evaluating the performance of a regression model, providing a quantitative measure of the ability of the regression model to explain the variation of the dependent variable. Specifically, the coefficient of determination represents a proportion of a difference (that is, the residual sum of squares) between the output value of the regression model and the actual value to a total variation (that is, the sum of the squares of the differences between the actual values and average value of the actual values). In other words, the coefficient of determination indicates how well the regression model fits the data. A higher value of the coefficient of determination indicates a better fit of the regression model to the data and, consequently, better performance of the regression model.

In an embodiment, the root mean square error and the coefficient of determination meeting the predetermined requirement means that the root mean square error is less than a first preset value, and the coefficient of determination is greater than a second preset value.

In the method for constructing the temperature compensation model provided in the embodiment of the present disclosure, time delay in temperature conduction is taken into account, and therefore the offset temperature data are involved in the training of the temperature compensation model.

The time delay in temperature conduction refers to that when heat is transferred from one object to another, the temperature change is not immediately reflected in an adjacent object but requires a certain amount of time to propagate to a more distant location. This delay is determined by the physical characteristics of heat conduction. For example, when the heating plate is turned on and off periodically, the two temperature sensors inside the mini weather station do not reach their minimum and maximum values exactly simultaneously, exhibiting a time delay of approximately 3 to 6 seconds.

Furthermore, the measured temperature is affected by other environmental data/parameters. Therefore, other environmental data are involved, and the temperature compensation model is trained based on the combination of other environmental data and the temperature data.

After obtaining the temperature compensation model based on the method for constructing the temperature compensation model provided in the embodiment of the present disclosure, the mini weather station performs temperature measurement by using the temperature compensation model.

For ease of understanding, the following describes in detail how temperature measurement is performed based on the temperature compensation model with reference to FIG. 3.

In step S301, two pieces of current temperature data are acquired from two temperature sensors, respectively, and environmental data, which is within an offset time period, is acquired from an environmental sensor.

In an embodiment, temperature data are collected by the two temperature sensors at the same time instant. The manner of acquiring the environmental data within the offset time period is the same as that described in S201 and is not repeated herein.

In step S302, actual temperature data is acquired via the temperature compensation model, based on the two pieces of current temperature data and the environmental data within the offset time period.

In an embodiment, the two pieces of current temperature data and the environmental data within the offset time period are input into the temperature compensation model. Based on the two pieces of current temperature data and the environmental data within the offset time period, the temperature compensation model outputs a corresponding target temperature data (that is, an actual temperature data). The temperature compensation model performs real-time compensation on the two pieces of current temperature data to obtain the actual temperature data, and thus improving the accuracy of temperature measurement performed by the mini weather station.

A method for constructing a temperature compensation model is provided in the embodiment of the present disclosure. The method includes: acquiring two pieces of current temperature data from the two temperature sensors, respectively, acquiring two pieces of offset temperature data from the two temperature sensors, respectively, and acquiring environmental data, which is within an offset time period, from the environmental sensor; determining, based on the two pieces of current temperature data and the environmental data, multiple pieces of current combined data corresponding to the two pieces of current temperature data; determining, based on the two pieces of offset temperature data and the environmental data, multiple pieces of offset combined data corresponding to the two pieces of offset temperature data; constructing a training dataset based on the two pieces of current temperature data, the multiple pieces of current combined data, the multiple pieces of offset combined data, and target temperature data; and training a linear regression model based on the training dataset to obtain the temperature compensation model. Temperature conduction delay and the influence of other environmental parameters are taken into consideration in the present disclosure, such that the offset temperature data and the environmental data are involved in the construction of the temperature compensation model, thereby improving the performance of the temperature compensation model. As a result, the temperature compensation model constructed through the method according to the embodiments of the present disclosure, together with the two temperature sensors and the environmental sensor in the mini weather station, perform real-time compensation on the measured temperature, thereby addressing the issue of the temperature measurements by the mini weather station are inaccurate under extreme conditions and improving the accuracy of temperature measurement performed by the mini weather station.

Furthermore, the two temperature sensors arranged at different positions of the same medium exhibit consistency, which further facilitates the construction of the temperature compensation model. In addition, since the two temperature sensors are arranged within the same medium, the influence of uncertain factors is reduced when the temperature data are acquired/measured by the two temperature sensors, thereby improving the validity of the temperature data acquired/measured by the temperature sensors.

### Second embodiment

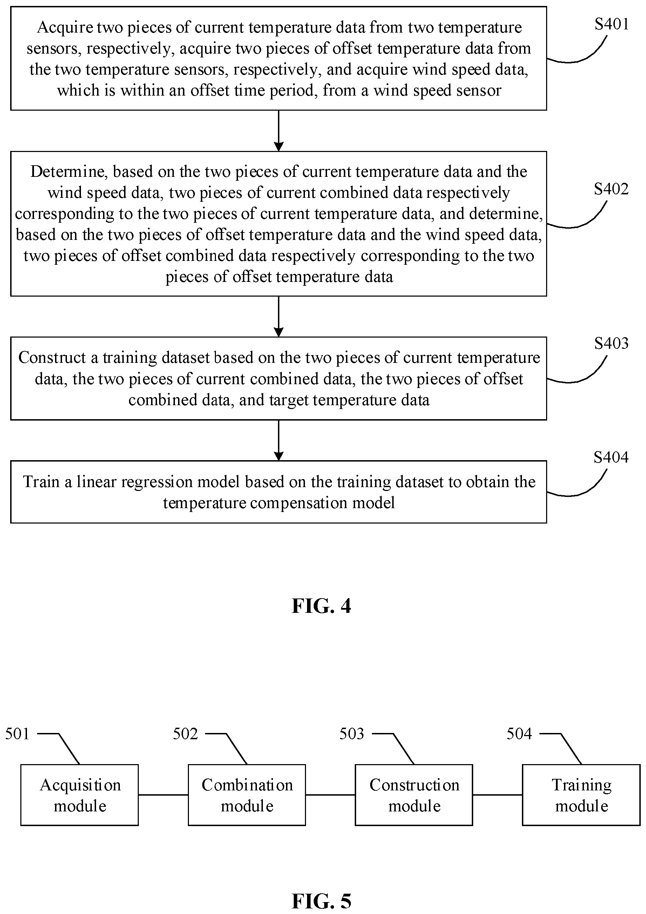

Hereinafter, a method for constructing a temperature compensation model according to the embodiment of the present disclosure is described in detail with reference to FIG. 4. The environmental sensor includes a wind speed sensor and the corresponding environmental data includes wind speed data.

In step S401, two pieces of current temperature data and two pieces of offset temperature data are acquired from the two temperature sensors, and wind speed data within an offset time period is acquired from the wind speed sensor.

The wind speed data within the offset time period is one of the meteorological parameters affecting temperature equilibrium, and the wind speed has a significant impact on the measurements performed by the two temperature sensors. For example, an increase in wind speed enhances the heat conduction between the air and the temperature sensors. When the wind speed is high, the airflow accelerates, allowing heat to transfer more rapidly from higher-temperature regions to lower-temperature regions, that is, increasing the speed of heat conduction, thereby causing the ambient temperatures sensed by the two temperature sensors different. Therefore, in the embodiment of the present disclosure, the influence of wind speed is taken into account, and accordingly, the wind speed data within the offset time period is acquired from the wind speed sensor.

In a possible implementation, the wind speed data within the offset time period refers to the average wind speed within the offset time period.

In an embodiment, the average wind speed within the offset time period is obtained as follows. Multiple wind speeds within the offset time period are obtained by the wind speed sensor. Based on the multiple wind speeds, the average wind speed within the offset time period is calculated.

For example, the offset time period is a duration corresponding a predetermined number of interval units. For each of the interval units, wind speed data at a time instant corresponding to the interval unit within the offset time period is acquired through the wind speed sensor. That is, the predetermined number of wind speed data are obtained. Based on the predetermined number of wind speed data, the average wind speed within the offset time period is calculated.

In a possible implementation, the environmental sensor further includes an illumination sensor and the corresponding environmental data includes illumination data. Accordingly, two pieces of current temperature data are acquired from the two temperature sensors, respectively, and two pieces of offset temperature data are acquired from the two temperature sensors, respectively. Wind speed data within an offset time period is acquired from the wind speed sensor, and illumination data within an offset time period is acquired from the illumination sensor.

The illumination data within the offset time period is one of the meteorological parameters affecting temperature equilibrium. For example, light may directly illuminate the temperature sensor, causing the sensor to absorb the energy and convert it into heat. Such direct irradiation raises the temperature of the temperature sensor, thereby affecting readings of the temperature sensor. Therefore, in the embodiment of the present disclosure, the influence of light may be considered, and accordingly, the illumination data within the offset time period is acquired from the illumination sensor.

In step S402, two pieces of current combined data respectively corresponding to the two pieces of current temperature data are determined based on the two pieces of current temperature data and the wind speed data; and two pieces of offset combined data respectively corresponding to the two pieces of offset temperature data are determined based on the two pieces of offset temperature data and the wind speed data.

In a possible implementation, one piece of current combined data is determined based on one of the two pieces of current temperature data and the wind speed data by using a first preset equation, and another piece of current combined data is determined based on another of the two pieces of current temperature data and the wind speed data by using the first preset equation. That is, the two pieces of current combined data respectively corresponding to the two pieces of current temperature are obtained.

The first preset equation is expressed as ${E}_{c} = \frac{{T}_{c}}{\sqrt{ν}}$ where *E_{c}* represents the current combined data corresponding to the current temperature data, *T_{c}* represents the current temperature data, and v represents the wind speed data within the offset time period.

Similarly, one piece of offset combined data is determined based on one of the two pieces of offset temperature data and the wind speed data by using a second preset equation, and another piece of offset combined data is determined based on another of the two pieces of offset temperature data and the wind speed data by using the second preset equation. That is, the two pieces of offset combined data respectively corresponding to the two pieces of offset temperature data are obtained.

The second preset equation is expressed as ${E}_{p} = \frac{{T}_{p}}{\sqrt{ν}}$ where *Eₚ* represents the offset combined data corresponding to offset temperature data, *Tₚ* represents the offset temperature data, and v represents the wind speed data within the offset time period.

The wind speed data and the temperature data exhibit an approximately inverse relationship, that is, higher wind speed data indicates lower temperature data; and lower wind speed data indicates higher temperature data.

In a possible implementation, the environmental data within the offset time period further includes illumination data, one piece of current combined data is determined based on one of the two pieces of current temperature data and the illumination data by using a third preset equation, and another piece of current combined data is determined based on another of the two pieces of current temperature data and the illumination data by using the third preset equation. That is, the two pieces of current combined data respectively corresponding to the two pieces of current temperature data are determined.

The third preset equation is expressed as ${E}_{c} = {T}_{c} \times k \times I$ where *E_{c}* represents the current combined data corresponding to the current temperature data, *T_{c}* represents the current temperature data, *k* represents a preset proportional coefficient, *I* represents the illumination data (with a unit of *W*/*m*², watts per square meter).

The preset proportional coefficient k is for quantifying the effect of the illumination intensity on the readings of the temperature sensor.

Similarly, one piece of offset combined data is determined based on one of the two pieces of offset temperature data and the illumination data by using a fourth preset equation, and another piece of offset combined data is determined based on another of the two pieces of offset temperature data and the illumination data by using the fourth preset equation. That is, the two pieces of offset combined data respectively corresponding to the two pieces of offset temperature data are determined.

The fourth preset equation is expressed as ${E}_{p} = {T}_{p} \times k \times I$ where *Eₚ* represents the offset combined data corresponding to offset temperature data, *Tₚ* represents the offset temperature data, k represents a preset proportional coefficient, *I* represents illumination data (with a unit of *W*/*m*², watts per square meter).

In step S403, a training dataset is constructed based on the two pieces of current temperature data, the two pieces of current combined data, the two pieces of offset combined data, and target temperature data.

The training dataset includes multiple data subsets, and each of the data subsets includes the two pieces of current temperature data, the two pieces of current combined data, the two pieces of offset combined data, and the target temperature data.

In a possible implementation, a six-variable quadratic polynomial feature is constructed based on the two pieces of current temperature data, the two pieces of current combined data and the two pieces of offset combined data; and the training dataset is constructed based on the six-variable quadratic polynomial feature and the target temperature data. In this condition, the training dataset includes multiple data subsets, and each of the data subsets includes the six-variable quadratic polynomial feature and the target temperature data.

In an embodiment, based on the two pieces of current temperature data, the two pieces of current combined data, and the two pieces of offset combined data, the six-variable quadratic polynomial feature is obtained by using the general form of a six-variable quadratic polynomial.

For ease of understanding, the general form of the six-variable quadratic polynomial is described in detail below in conjunction with equation (5). $F = P \left(x={T}_{c 1},{T}_{c 2},{E}_{c 1},{E}_{c 2},{E}_{p 1},{E}_{p 2}\right) = {\sum }_{i , j = 1}^{6} {a}_{ij} {x}_{i} {x}_{j} + {\sum }_{i = 1}^{6} {b}_{i} {x}_{i} + c$ where F represents the six-variable quadratic polynomial feature, and P represents the general form of the six-variable quadratic polynomial. x represents a variable, *T*_{*c*1} represents one of the two pieces of current temperature data, *T*_{*c*2} represents another of the two pieces of current temperature data; *E*_{*c*1} represents one of the two pieces of current combined data, *E*_{*c*2} represents another of the two pieces of current combined data; *E*_{*p*1} represents one of the two pieces of offset combined data, and *E*_{*p*2} represents another of the two pieces of offset combined data. *xᵢ* represents an i-th one of (*T*_{*c*1}*, T*_{*c*2}, *E*_{*c*1}*, E*_{*c*2}*, E*_{*p*1}*, E*_{*p*2}), and *xⱼ* represents a j-th one of (*T*_{*c*1}, *T*_{*c*2}, *E*_{*c*1}*, E*_{*c*2}*, E*_{*p*1}*, E*_{*p*2}). *aᵢⱼ, bᵢ* and c represent preset weighting coefficients. It should be noted that *aᵢⱼ, bᵢ* and *c* are determined depending on actual conditions. Furthermore, when *i=j,* it indicates the square of a single variable.

Based on the polynomial feature, new features are created by raising original features to powers and computing their cross-products, enabling the capture of nonlinear relationships in the data. For a regression model, if the data inherently exhibit nonlinear relationships, merely using linear features results in a poor fit to the data. Polynomial features allow the model to capture such nonlinear relationships, thereby improving the prediction performance of the model.

Since the relationship among the current temperature data, the current combined data, and the offset combined data is nonlinear, the nonlinear relationship can be captured through a six-variable quadratic polynomial, thereby improving the prediction capability of the model.

Further, in a possible implementation, when the environmental data within the offset time period further includes illumination data, the training dataset includes multiple data subsets, and each of the data subsets includes two pieces of current temperature data, four current combined data (two pieces of current combined data corresponding to the wind speed data and two pieces of current combined data corresponding to the illumination data), four offset combined data (two pieces of offset combined data corresponding to the wind speed data and two pieces of offset combined data corresponding to the illumination data), and target temperature data.

In step S404, a linear regression model is trained based on the training dataset to obtain the temperature compensation model.

The above step S404 is identical to step S204 in the first embodiment. Therefore, the detailed implementation of step S404 may refer to the detailed implementation of step S204 in the first embodiment, and thus will not be described again herein.

Further, after the temperature compensation model is obtained based on the above steps S401 to S404 (that is, the temperature compensation model is obtained when the environmental data includes the wind speed data), two pieces of current temperature data are acquired from the two temperature sensors, respectively, and wind speed data within the offset time period is acquired from the wind speed sensor; and actual temperature data is determined by using the temperature compensation model, based on the two pieces of current temperature data and the wind speed data within the offset time period.

Further, after the temperature compensation model is obtained when the environmental data includes the wind speed data and the illumination data based on the above steps S401 to S404, two pieces of current temperature data are acquired from the two temperature sensors, respectively, wind speed data within the offset time period is acquired from the wind speed sensor, and illumination data within the offset time period is acquired from the illumination sensor; and actual temperature data is determined by using the temperature compensation model based on the two pieces of current temperature data, the wind speed data within the offset time period and the illumination data within the offset time period.

A method for constructing a temperature compensation model is provided in the embodiment of the present disclosure. The method includes: acquiring two pieces of current temperature data from the two temperature sensors, respectively, acquiring two pieces of offset temperature data from the two temperature sensors, respectively, and acquiring wind speed data, which is within an offset time period; determining, based on the two pieces of current temperature data and the wind speed data, two pieces of current combined data respectively corresponding to the two pieces of current temperature data; determining, based on the two pieces of offset temperature data and the wind speed data, two pieces of offset combined data respectively corresponding to the two pieces of offset temperature data; constructing a training dataset based on the two pieces of current temperature data, the two pieces of current combined data, the two pieces of offset combined data, and target temperature data; and training a linear regression model based on the training dataset to obtain the temperature compensation model. Temperature conduction delay and the influence of the wind speed are taken into consideration in the embodiment of the present disclosure, such that the offset temperature data and the wind speed data are involved in the construction of the temperature compensation model, thereby improving the performance of the temperature compensation model. As a result, the temperature compensation model constructed through the method according to the embodiments of the present disclosure, together with the two temperature sensors and the environmental sensor in the mini weather station, perform real-time compensation on the measured temperature, thereby addressing the issue of the temperature measurements by the mini weather station are inaccurate under extreme conditions and improving the accuracy of temperature measurement performed by the mini weather station.

### Third embodiment

Hereinafter, an apparatus for constructing a temperature compensation model according to the embodiment of the present disclosure is described in detail with reference to FIG. 5.

As shown in FIG. 5, the apparatus for constructing the temperature compensation model according to an embodiment of the present disclosure includes an acquisition module 501, a combination module 502, a construction module 503 and a training module 504.

The acquisition module 501 is configured to acquire two pieces of current temperature data and two pieces of offset temperature data from the two temperature sensors, acquire environmental data, which is within an offset time period, from the environmental sensor. The two pieces of current temperature data are collected at a current time instant by the two temperature sensors, respectively. The two pieces of offset temperature data are collected at an offset time instant by the two temperature sensors, respectively. The offset time instant refers to a time instant preceding the current time instant by a predetermined time interval, and the offset time period refers to a time period between the current time instant and the offset time instant.

The combination module 502 is configured to determine, based on the two pieces of current temperature data and the environmental data, multiple pieces of current combined data corresponding to the two pieces of current temperature data, and determine, based on the two pieces of offset temperature data and the environmental data, multiple pieces of offset combined data corresponding to the two pieces of offset temperature data.

The construction module 503 is configured to construct a training dataset based on the two pieces of current temperature data, the multiple pieces of current combined data, the multiple pieces of offset combined data, and target temperature data. The training dataset includes multiple data subsets. Each of the data subsets includes the two pieces of current temperature data, the multiple pieces of current combined data, the multiple pieces of offset combined data, and the target temperature data.

The training module 504 is configured to train a linear regression model based on the training dataset to obtain the temperature compensation model.

In a possible implementation, the acquisition module 501 is configured to acquire two pieces of current temperature data respectively through the two temperature sensors, acquire two pieces of offset temperature data respectively through the two temperature sensors, and acquire wind speed data, which is within an offset time period, from a wind speed sensor. The combination module 502 is configured to determine, based on the two pieces of current temperature data and the wind speed data, two pieces of current combined data respectively corresponding to the two pieces of current temperature data, and determine, based on the two pieces of offset temperature data and the wind speed data, two pieces of offset combined data respectively corresponding to the two pieces of offset temperature data. The construction module 503 is configured to construct a training dataset based on the two pieces of current temperature data, the two pieces of current combined data, the two pieces of offset combined data, and target temperature data.

In a possible implementation, the construction module 503 is configured to construct a six-variable quadratic polynomial feature based on the two pieces of current temperature data, the two pieces of current combined data and the two pieces of offset combined data; construct the training dataset based on the six-variable quadratic polynomial feature and the target temperature data. The training dataset includes multiple data subsets, and each of the data subsets includes the six-variable quadratic polynomial feature and the target temperature data.

In a possible implementation, the combination module 502 is configured to determine, through a first preset equation, the two pieces of current combined data respectively corresponding to the two pieces of current temperature data based on the two pieces of current temperature data and the wind speed data; and determine, through a second preset equation, two pieces of offset combined data respectively corresponding to the two pieces of offset temperature data based on the two pieces of offset temperature data and the wind speed data.

In a possible implementation, the training module 504 is configured to train the linear regression model based on the training dataset to obtain the temperature compensation model, where a root mean square error and a coefficient of determination corresponding to the linear regression model are recorded in the training and the training terminates when the root mean square error and the coefficient of determination meet a predetermined requirement.

An apparatus for constructing a temperature compensation model is provided in the embodiment of the present disclosure. The apparatus includes: an acquisition module 501, configured to acquire two pieces of current temperature data and two pieces of offset temperature data from the two temperature sensors, acquire environmental data, which is within an offset time period, from the environmental sensor; a combination module 502, configured to determine, based on the two pieces of current temperature data and the environmental data, multiple pieces of current combined data corresponding to the two pieces of current temperature data, and determine, based on the two pieces of offset temperature data and the environmental data, multiple pieces of offset combined data corresponding to the two pieces of offset temperature data; a construction module 503, configured to construct a training dataset based on the two pieces of current temperature data, the multiple pieces of current combined data, the multiple pieces of offset combined data, and target temperature data; and a training module 504, configured to train a linear regression model based on the training dataset to obtain the temperature compensation model. Temperature conduction delay and the influence of other environmental parameters are taken into consideration in the embodiment of the present disclosure, such that the offset temperature data and the environmental data are involved in the construction of the temperature compensation model, thereby improving the performance of the temperature compensation model. As a result, the temperature compensation model constructed through the method according to the embodiments of the present disclosure, together with the two temperature sensors and the environmental sensor in the mini weather station, perform real-time compensation on the measured temperature, thereby addressing the issue of the temperature measurements by the mini weather station are inaccurate under extreme conditions and improving the accuracy of temperature measurement performed by the mini weather station.

It should be noted that the embodiments in this specification are described in a progressive manner, the same or similar parts among the embodiments may be referred to each other, and each of the embodiments emphasizes the differences from other embodiments. In particular, the apparatus embodiment is virtually similar to the method embodiment, and therefore is described relatively briefly. For relevant details, reference may be made to the corresponding description of the method embodiment. The method and apparatus embodiments described above are only illustrative, in which the units described as separate components may be or may not be physically separated, and the components shown as units may be or may not be physical units, that is, may be located in one place, or distributed over multiple network units. Some or all of the modules may be selected according to an actual requirement to achieve the objective of the solution of the embodiments. Those skilled in the art can understand and implement the solution without any creative effort.

The above description is only a specific embodiment of the present disclosure, and the protection scope of the present disclosure is not limited thereto. Any changes or replacements that may be easily conceived by those skilled in the art within the technical scope disclosed in the present disclosure should fall within the protection scope of the present disclosure. Hence, the protection scope of the present disclosure should be defined by the protection scope of the claims.

## Claims

1. A method for constructing a temperature compensation model, wherein the method is applied to a weather station, the weather station comprises: a main body, an environmental sensor, and two temperature sensors, the two temperature sensors are arranged at different positions of a same medium, one of the two temperature sensors is closer to the main body than another of the two temperature sensors is, and wherein the method comprises:
acquiring two pieces of current temperature data and two pieces of offset temperature data from the two temperature sensors, and acquiring environmental data, which is within an offset time period, from the environmental sensor, wherein the two pieces of current temperature data are collected at a current time instant by the two temperature sensors, respectively, the two pieces of offset temperature data are collected at an offset time instant by the two temperature sensors, respectively, the offset time instant refers to a time instant preceding the current time instant by a predetermined time interval, and the offset time period refers to a time period between the current time instant and the offset time instant;
determining, based on the two pieces of current temperature data and the environmental data, a plurality of pieces of current combined data corresponding to the two pieces of current temperature data, and determining, based on the two pieces of offset temperature data and the environmental data, a plurality of pieces of offset combined data corresponding to the two pieces of offset temperature data;
constructing a training dataset based on the two pieces of current temperature data, the plurality of pieces of current combined data, the plurality of pieces of offset combined data, and target temperature data, wherein the training dataset comprises a plurality of data subsets, and each of the data subsets comprises the two pieces of current temperature data, the plurality of pieces of current combined data, the plurality of pieces of offset combined data, and the target temperature data; and
training a linear regression model based on the training dataset to obtain the temperature compensation model.

2. The method according to claim 1, wherein the environmental sensor comprises a wind speed sensor, and the environmental data within the offset time period acquired from the environmental sensor comprises: wind speed data within the offset time period acquired from the wind speed sensor, wherein
the determining, based on the two pieces of current temperature data and the environmental data, a plurality of pieces of current combined data corresponding to the two pieces of current temperature data, and determining, based on the two pieces of offset temperature data and the environmental data, a plurality of pieces of offset combined data corresponding to the two pieces of offset temperature data comprises:
determining, based on the two pieces of current temperature data and the wind speed data, two pieces of current combined data respectively corresponding to the two pieces of current temperature data, and determining, based on the two pieces of offset temperature data and the wind speed data, two pieces of offset combined data respectively corresponding to the two pieces of offset temperature data; and
the constructing a training dataset based on the two pieces of current temperature data, the plurality of pieces of current combined data, the plurality of pieces of offset combined data, and target temperature data comprises:
constructing the training dataset based on the two pieces of current temperature data, the two pieces of current combined data, the two pieces of offset combined data, and the target temperature data, wherein the training dataset comprises a plurality of data subsets, and each of the data subsets comprises the two pieces of current temperature data, the two pieces of current combined data, the two pieces of offset combined data, and the target temperature data.

3. The method according to claim 2, wherein the constructing the training dataset based on the two pieces of current temperature data, the two pieces of current combined data, the two pieces of offset combined data, and the target temperature data comprises:
constructing a six-variable quadratic polynomial feature based on the two pieces of current temperature data, the two pieces of current combined data and the two pieces of offset combined data; and
constructing the training dataset based on the six-variable quadratic polynomial feature and the target temperature data, wherein the training dataset comprises a plurality of data subsets, and each of the data subsets comprises the six-variable quadratic polynomial feature and the target temperature data.

4. The method according to claim 2, wherein the wind speed data within the offset time period comprises an average wind speed within the offset time period.

5. The method according to claim 4, wherein the average wind speed within the offset time period is acquired by:
acquiring a plurality of wind speeds, which are within the offset time period, by the wind speed sensor; and
calculating the average wind speed within the offset time period based on the plurality of wind speeds.

6. The method according to claim 2, wherein the determining, based on the two pieces of current temperature data and the wind speed data, two pieces of current combined data respectively corresponding to the two pieces of current temperature data comprises:
determining, through a first preset equation, the two pieces of current combined data respectively corresponding to the two pieces of current temperature data based on the two pieces of current temperature data and the wind speed data,
wherein the first preset equation is expressed as: ${E}_{c} = \frac{{T}_{c}}{\sqrt{ν}}$
wherein *E_{c}* represents the current combined data corresponding to the current temperature data, *T_{c}* represents the current temperature data, and v represents the wind speed data within the offset time period; and
the determining, based on the two pieces of offset temperature data and the wind speed data, two pieces of offset combined data respectively corresponding to the two pieces of offset temperature data comprises:
determining, through a second preset equation, two pieces of offset combined data respectively corresponding to the two pieces of offset temperature data based on the two pieces of offset temperature data and the wind speed data,
wherein the second preset equation is expressed as: ${E}_{p} = \frac{{T}_{p}}{\sqrt{ν}}$
wherein *Eₚ* represents offset combined data corresponding to offset temperature data, *Tₚ* represents the offset temperature data, and v represents the wind speed data within the offset time period.

7. The method according to claim 2, wherein the predetermined time interval is a duration corresponding to a predetermined number of interval units.

8. The method according to claim 1, wherein the training a linear regression model based on the training dataset to obtain the temperature compensation model comprises:
training the linear regression model based on the training dataset to obtain the temperature compensation model, wherein a root mean square error and a coefficient of determination corresponding to the linear regression model are recorded in the training and the training terminates when the root mean square error and the coefficient of determination meet a predetermined requirement.

9. The method according to any one of claims 1 to 8, wherein after the training a linear regression model based on the training dataset to obtain the temperature compensation model, the method further comprises:
acquiring two pieces of current temperature data from the two temperature sensors, respectively, and acquiring environmental data, which is within an offset time period, from the environmental sensor; and
determining actual temperature data by using the temperature compensation model, based on the two pieces of current temperature data and the environmental data within the offset time period.

10. An apparatus for constructing a temperature compensation model, wherein the apparatus is applied to a weather station, the weather station comprises: a main body, an environmental sensor, and two temperature sensors, the two temperature sensors are arranged at different positions of a same medium, one of the two temperature sensors is closer to the main body than another of the two temperature sensors is, and wherein the apparatus comprises:
an acquisition module, configured to acquire two pieces of current temperature data and two pieces of offset temperature data from the two temperature sensors, acquire environmental data, which is within an offset time period, from the environmental sensor, wherein the two pieces of current temperature data are collected at a current time instant by the two temperature sensors, respectively, the two pieces of offset temperature data are collected at an offset time instant by the two temperature sensors, respectively, the offset time instant refers to a time instant preceding the current time instant by a predetermined time interval, and the offset time period refers to a time period between the current time instant and the offset time instant;
a combination module, configured to determine, based on the two pieces of current temperature data and the environmental data, a plurality of pieces of current combined data corresponding to the two pieces of current temperature data, and determine, based on the two pieces of offset temperature data and the environmental data, a plurality of pieces of offset combined data corresponding to the two pieces of offset temperature data;
a construction module, configured to construct a training dataset based on the two pieces of current temperature data, the plurality of pieces of current combined data, the plurality of pieces of offset combined data, and target temperature data, wherein the training dataset comprises a plurality of data subsets, and each of the data subsets comprises the two pieces of current temperature data, the plurality of pieces of current combined data, the plurality of pieces of offset combined data, and the target temperature data; and
a training module, configured to train a linear regression model based on the training dataset to obtain the temperature compensation model.
